# EUROPEAN PATENT APPLICATION

(11) **EP 4 514 067 A1**
(43) Date of publication of application: **26.02.2025**
(21) Application number: 23791673.9
(22) Date of filing: 05.04.2023
(51) Int. Cl.: H05B 3/20, B62D 1/06, H05B 3/10, H05B 3/56

(54) **PLANAR UNIT, STEERING WHEEL, AND PRODUCTION METHOD FOR PLANAR UNIT**

(30) Priority: 21.04.2022 JP 2022070005
(71) Applicant: Kurabe Industrial Co., Ltd., Hamamatsu-shi, Shizuoka 432-8521 (JP)
(72) Inventor: TAKEDA, Hiroya, Hamamatsu-shi, Shizuoka 432-8521 (JP); MORISHITA, Norishige, Hamamatsu-shi, Shizuoka 432-8521 (JP)
(74) Representative: Pfenning, Meinig & Partner mbB
(86) International application number: PCT/JP2023/014020
(87) International publication number: WO 2023/204022

(57) **Abstract**

To provide a planar unit and a steering wheel that prevent a user from feeling a sense of discomfort during a steering operation and the like and that provide excellent productivity. The planar unit is made up of a base material and a linear body to be arranged on the base material, the linear body being one of or both a heater wire and a sensor wire, wherein a thermal fusion bonding part is formed on an outermost layer of the linear body, and either the planar unit includes a sewing thread that couples the linear body and the base material to each other, the sewing thread penetrating into the thermal fusion bonding part of the linear body or the planar unit includes a sewing thread mark created by melting of a sewing thread that couples the linear body and the base material to each other, the thermal fusion bonding part of the linear body and the sewing thread mark having been planarized. In the steering wheel, the planar unit is installed between the wheel core material and the covering material.

## Description

### Technical Field

The present invention relates to a planar unit including a heater unit for heating a wheel part of a steering wheel used in, for example, an automobile or a vessel and a sensor unit for temperature detection or grasp detection of the steering wheel and, in particular, to a planar unit that prevents a user from feeling a sense of discomfort during a steering operation and the like and that provides excellent productivity.

### Background Art

Conventionally, mounting a heater unit to a wheel part of a steering wheel in order to warm the hands of a driver during cold season has been proposed. A steering wheel is made up of a wheel part, a spoke part, and a boss part and the wheel part is formed of a wheel core material created by covering a metallic core with a urethane resin or the like and a covering material made of a synthetic resin, a fibrous product, leather, or the like. The heater unit is installed between the wheel core material and the covering material and is fed power by being connected to a lead routed through the spoke part and the boss part.

As the heater unit installed in the steering wheel, for example, a heater unit in which a heater wire is arranged in a predetermined pattern shape on a base material as shown in Patent Literature 1 to 4 is known. In this case, various foamed resin sheets, foamed rubber sheets, rubber sheets, nonwoven fabric, woven fabric, and the like are being disclosed as the base material. In addition, examples of related techniques include Patent Literature 5 and the like.

Examples of the sensor unit include those that function as a capacitance sensor or a temperature sensor. A capacitance sensor is used in a touch panel, a seat occupancy sensor, and the like and, in particular, a so-called two-electrode-type capacitance sensor is widely used in various applications due to its superior detection sensitivity. The two-electrode-type capacitance sensor takes advantage of the fact that, when a human body approaches two electrodes being insulated in a state of proximity, a capacitance value between the two electrodes changes, and detects a change in the capacitance. Such a technique is being considered for, for example, grasp detection of a steering wheel. An example of a sensor unit constituted of a linear capacitance sensor is described in Patent Literature 6 and the like. Known examples of temperature sensors include those used as temperature sensing means of a warming tool such as an electrically-heated carpet and an electric blanket. These examples adopt a structure in which a sensor wire is wound around a central core material and an outer circumference of the sensor wire is covered by a sheath, and temperature detection is performed by detecting a change in a resistance value due to a temperature of the sensor wire. Examples of use of the sensor wire include arranging the sensor wire in a vicinity of a heat generation source such as a heater wire to detect a temperature of the heater wire and arranging the sensor wire in a serpentine shape to detect a temperature as a plane. An example of a sensor unit constituted of a linear temperature sensor is described in Patent Literature 7 and the like.

### Citation List

### Patent Literature

[Patent Literature 1] Japanese Patent No. 4202071: Kurabe Industrial Co., Ltd.
[Patent Literature 2] International Patent Publication No. WO 2014/104000: Toyoda Gosei Co., Ltd., Kurabe Industrial Co., Ltd.
[Patent Literature 3] Japanese Patent No. 6468701: Kurabe Industrial Co., Ltd.
[Patent Literature 4] Japanese Patent No. 6760941: Kurabe Industrial Co., Ltd.
[Patent Literature 5] Japanese Patent No. 3991750: Matsushita Electric Industrial Co., Ltd.
[Patent Literature 6] Japanese Patent No. 6851730: Kurabe Industrial Co., Ltd.
[Patent Literature 7] Japanese Patent No. 5562678: Kurabe Industrial Co., Ltd.

### Disclosure of Invention

For example, the heater units described in Patent Literature 2 to 4 are formed such that a thickness of a location in the base material where a heater wire is arranged is made thin so as to follow a shape of the heater wire, and accordingly, a flat shape is created. With such a heater unit, even when the heater unit is incorporated into a steering wheel, irregularities due to the heater wire usually do not appear and a user will not experience a sense of discomfort during a steering operation. However, nowadays, when incorporating a heater unit into a steering wheel, the heater unit is incorporated while being tightly stretched in order to prevent the heater unit from wrinkling. In addition, a surface on which the heater wire is arranged is required to be positioned on a covering material side of the steering wheel in order to increase heating efficiency of the heater unit. Furthermore, a heater unit may be incorporated into the steering wheel according to various manufacturing methods such as pasting the heater unit to a covering material in advance and subsequently assembling the heater unit together with the covering material to a wheel core material and pasting the heater unit to the wheel core material in advance and subsequently covering the heater unit with the covering material. Differences among such assembly methods of a heater unit also affect how irregularities appear and there is a need for a heater unit in which irregularities due to a heater wire do not appear and which prevents a user from experiencing a sense of discomfort during a steering operation regardless of the adopted assembly method.

In addition, the heater units described in Patent Literature 1 to 4 are configured such that a heater wire 1 is arranged in a predetermined pattern shape on a base material and glued and fixed. A manufacturing method thereof is as follows. First, a hot press jig provided with a mechanism including a plurality of locking members that are movable upward and downward is used to arrange the heater wire 1 in a predetermined pattern shape while hooking the heater wire to the plurality of locking members. Next, a base material is arranged on the heater wire. A press hot plate is lowered to subject the heater wire and the base material to heat and pressure to glue and fix the heater wire and the base material. With such a manufacturing method, when the pattern shape becomes finer, the number of locking members increases significantly. For example, a pattern shape that needs to have high density and high output such as a heater unit for a steering wheel requires more than 1,000 locking members. Given that positional design and arrangement of the more than 1,000 locking members must be performed every time a design change such as a change in an external shape of the base material or a change in the pattern shape of the heater wire is made, there is a need to avoid such hassle.

On the other hand, the heater unit described in Patent Literature 5 involves using a machine such as a sewing machine for stitching to stitch a heater wire to a base material with a sewing thread made up of a needle thread and a bobbin thread. In such a heater unit, the heater wire is fixed to the base material solely by the sewing thread. Therefore, there is a problem that repetitively applied load during use causes the thread to gradually fray or break and the heater wire to move. When the heater wire moves, not only can a seat be no longer be uniformly heated but a risk of local anomalous heat generation also arises. There is also a problem that the heater wire breaks loose from between the sewing threads. In this case, there is also a risk that the heater wire bends at an acute angle where the heater wire had broken loose and a disconnection occurs. Furthermore, overall thickness increases by a thickness of the sewing thread in portions where the sewing thread and the heater wire overlap with each other. As described above, given that there is an overwhelming demand for a surface of a heater unit used in a steering wheel to be flat and without irregularities, a tactile sensation of the sewing thread may become a problem.

A similar problem arises in a planar sensor unit in which a linear sensor wire is arranged on a base material as shown in Patent Literature 6 and 7.

The present invention has been made in order to solve such problems in related art and an object thereof is to provide a planar unit that prevents a user from feeling a sense of discomfort during a steering operation and the like and that provides excellent productivity.

In order to achieve the object described above, a planar unit according to the present invention is made up of a base material and a linear body to be arranged on the base material, the linear body being one of or both a heater wire and a sensor wire, wherein a thermal fusion bonding part is formed on an outermost layer of the linear body, the planar unit includes a sewing thread that couples the linear body and the base material to each other, and the sewing thread is inserted into the thermal fusion bonding part of the linear body.

In addition, a thickness of a location where the linear body is arranged in the base material is made thin so as to follow a shape of the linear body, and the sewing thread is inserted into the thermal fusion bonding part of the linear body and conceivably has a basically flat shape.

Furthermore, a planar unit according to another mode of the present invention is made up of a base material and a linear body to be arranged on the base material, the linear body being one of or both a heater wire and a sensor wire, wherein a thermal fusion bonding part is formed on an outermost layer of the linear body, the planar unit includes a sewing thread mark created by melting of a sewing thread that couples the linear body and the base material to each other, and the thermal fusion bonding part of the linear body and the sewing thread mark is planarized.

In addition, a thickness of a location where the linear body is arranged in the base material is made thin so as to follow a shape of the linear body, and the thermal fusion bonding part of the linear body and the sewing thread mark is planarized and conceivably have a basically flat shape.

Furthermore, a steering wheel according to the present invention is made up of the planar unit, a wheel core material, and a covering material, wherein the planar unit is installed between the wheel core material and the covering material.

In addition, a method of manufacturing a planar unit according to the present invention includes the steps of: fixing a linear body onto a base material by a sewing thread, the linear body having a thermal fusion bonding part formed on an outermost layer thereof; and subjecting the base material and the linear body to heat and pressure to make a thickness of a location where the linear body is arranged in the base material thin so as to follow a shape of the linear body, causing the sewing thread to be inserted into the thermal fusion bonding part of the linear body to give the sewing thread a basically flat shape, and fixing the base material and the linear body to each other with the thermal fusion bonding part, wherein the linear body is one of or both a heater wire and a sensor wire.

Furthermore, a method of manufacturing a planar unit according to another mode of the present invention includes the steps of: fixing a linear body onto a base material by a sewing thread, the linear body having a thermal fusion bonding part formed on an outermost layer thereof; and subjecting the base material and the linear body to heat and pressure to make a thickness of a location where the linear body is arranged in the base material thin so as to follow a shape of the linear body, melting the sewing thread and the thermal fusion bonding part, planarizing a sewing thread mark created by melting of the sewing thread and the thermal fusion bonding part to give the sewing thread mark and the thermal fusion bonding part a basically flat shape, and fixing the base material and the linear body to each other with the thermal fusion bonding part, wherein the linear body is one of or both a heater wire and a sensor wire.

According to the present invention, since not only irregularities due to a linear body such as a heater wire but irregularities due to a sewing thread also do not appear and the planar unit has a flat shape, even if the planar unit is assembled to a steering wheel using various methods, irregularities due to the linear body do not appear and a user is prevented from feeling a sense of discomfort during a steering operation.

In addition, since a manufacturing method in which the linear body is arranged on the base material while stitching the linear body with a machine such as a sewing machine for stitching can be adopted, a large number of locking members are no longer required. Therefore, the hassle when performing a design change can be significantly reduced and productivity can be improved.

Furthermore, since the base material and the linear body are to be fixed by thermal fusion bonding after fastening and fixing the linear body to the base material by sewing threads, a flatness of the planar unit can be further increased.

### Brief Description of Drawings

[Fig. 1] Fig. 1 is a plan view showing a configuration of a planar unit according to the present invention.
[Fig. 2] Fig. 2 is a sectional view schematically showing, enlarged, a main part of a planar unit according to a first embodiment of the present invention.
[Fig. 3] Fig. 3 is a sectional view schematically showing, enlarged, a main part at a midway stage of manufacturing in a planar unit according to an embodiment of the present invention.
[Fig. 4] Fig. 4 is a diagram showing an embodiment of the present invention being a diagram showing a configuration of a hot press-type heater manufacturing apparatus.
[Fig. 5] Fig. 5 is a sectional photograph of the main part of the planar unit according to the first embodiment of the present invention.
[Fig. 6] Fig. 6 is a sectional photograph of a main part of a planar unit according to a second embodiment of the present invention.
[Fig. 7] Fig. 7 is a partially cutaway side view showing an example of a heater wire used in the present invention.
[Fig. 8] Fig. 8 is a partially cutaway side view showing an example of a heater wire used in the present invention.
[Fig. 9] Fig. 9 is a partially cutaway side view showing an example of the heater wire used in the present invention.
[Fig. 10] Fig. 10 is a partially cutaway side view showing an example of the heater wire used in the present invention.
[Fig. 11] Fig. 11 is a partially cutaway side view showing an example of the heater wire used in the present invention.
[Fig. 12] Fig. 12 is a partially cutaway side view showing an example of the heater wire used in the present invention.
[Fig. 13] Fig. 13 is a partially cutaway side view showing an example of the heater wire used in the present invention.
[Fig. 14] Fig. 14 is a partially cutaway side view showing an example of a sensor wire used in the present invention.
[Fig. 15] Fig. 15 is a partially cutaway side view showing an example of the sensor wire used in the present invention.
[Fig. 16] Fig. 16 is a partially cutaway side view showing a situation where the planar unit according to the present invention is embedded in a steering wheel.
[Fig. 17] Fig. 17 is a partially cutaway side view showing a situation where the planar unit according to the present invention is embedded in a vehicular seat.

### Description of Embodiments

Hereinafter, embodiments of the present invention will be described with reference to the drawings. The embodiments represent examples which assume that a heater wire is to be used as a linear body and the planar unit according to the present invention is to be applied to a vehicular steering heater.

### (First Embodiment)

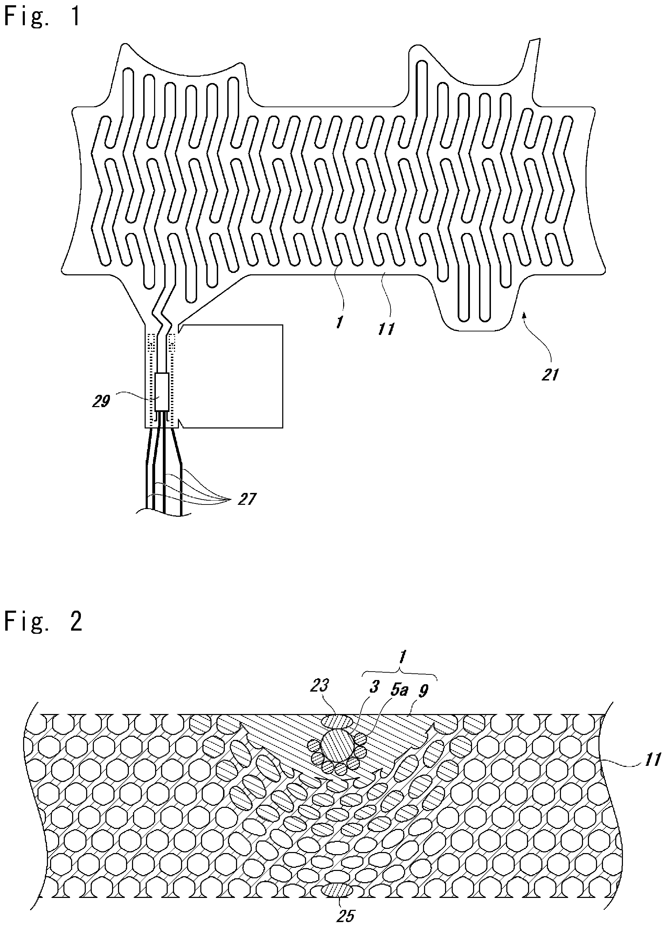

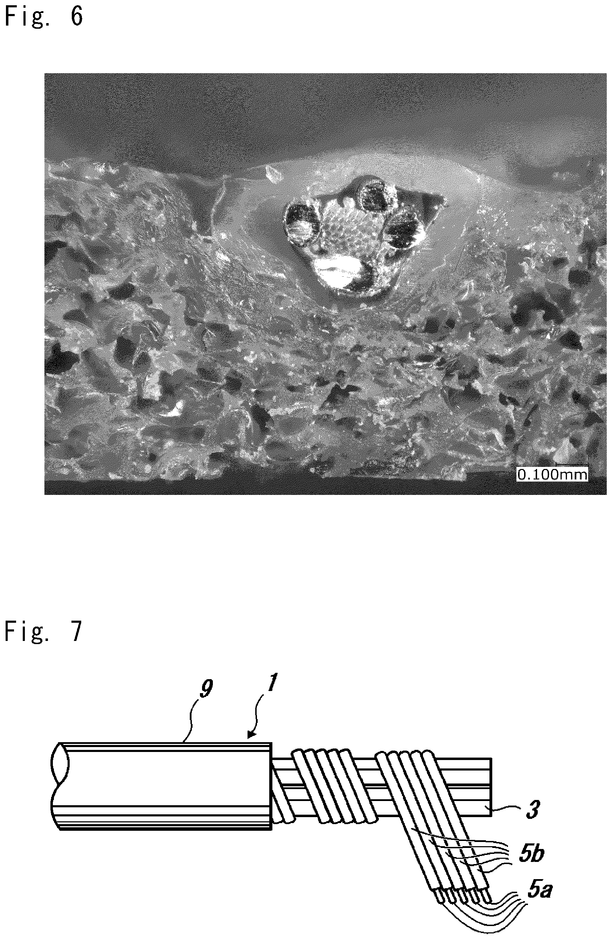

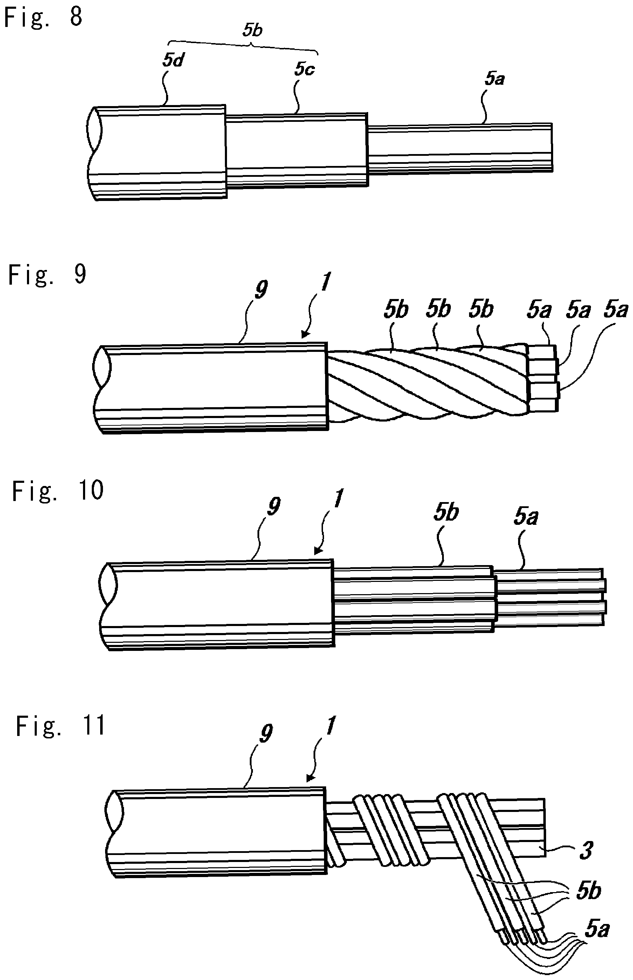

First, a first embodiment will be described with reference to Figs. 1 and 2. A configuration of a heater wire 1 according to the present first embodiment will now be described. The heater wire 1 according to the first embodiment is configured as shown in Figs. 7 and 8. First, a core material 3 is formed of an aromatic polyamide fiber bundle with an outer diameter of approximately 0.2 mm. Five paralleled conductor strands 5a made of a copper alloy wire with a strand diameter of 0.08 mm and containing hard tin are spirally wound around an outer circumference of the core material 3 at a pitch of approximately 1.0 mm. As shown in Figs. 7 and 8, an insulating film 5b is formed around the conductor strands 5a. The insulating film 5b is formed of an inner layer 5c made of a polyurethane resin and an outer layer 5d made of a polyamide-imide resin. The inner layer 5c of the insulating film 5b was formed so as to become a layer with a thickness of 4 µm by applying a polyurethane varnish around the conductor strands 5a and drying the polyurethane varnish. Next, the outer layer 5d was formed so as to become a layer with a thickness of 4 µm by applying a polyamide-imide varnish on an outer circumference of the inner layer 5c and drying the polyamide-imide varnish. The outer circumference of the core material 3 around which the conductor strands 5a are wound is coated with an insulator layer. The insulator layer is formed by extrusion coating so that a polyethylene resin blended with a flame retardant assumes a thickness of 0.2 mm. In the present embodiment, the polyethylene resin of the insulator layer functions as a thermal fusion bonding part 9. A finished outer diameter of the heater wire 1 configured as described above is 0.8 mm. The core material 3 is effective in terms of enhanced flexibility and tensile strength. It is also possible to parallel or strand a plurality of conductor strands without using the core material 3.

Next, a configuration of a base material 11 to which a cord-shaped heater (for example, the heater wire 1) configured as described above is bonded and fixed will be described. The base material 11 according to the first embodiment is made of a foamed polyurethane resin with an apparent density of 40 kg/m3 (in conformity to JIS K 7222), a hardness of 220 N (in conformity to JIS K 6400), and a thickness of 8 mm. The base material 11 is made into a desired shape by a known method such as die cutting.

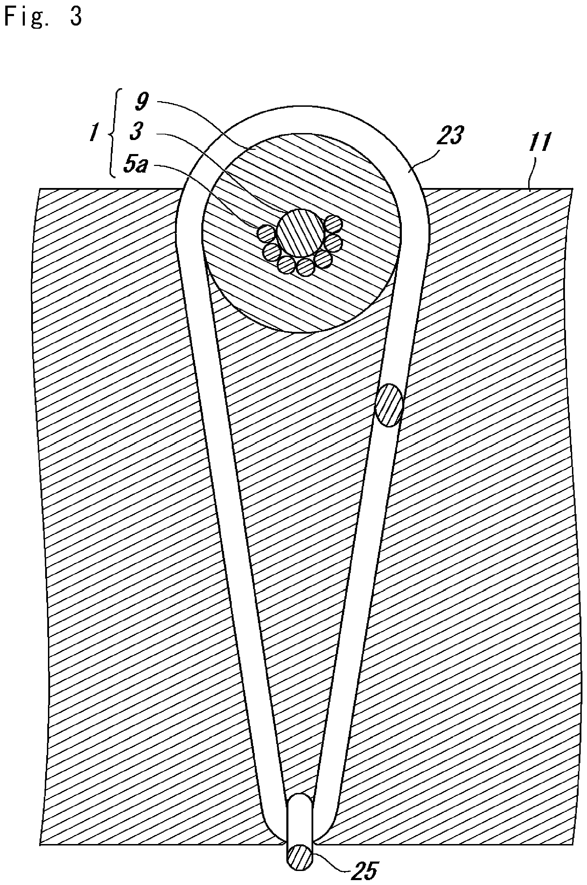

Next, a configuration in which the heater wire 1 described above is arranged on the base material 11 in a predetermined pattern shape will be described. The base material 11 is arranged on a movable table and the heater wire 1 is arranged on a heater wire supplying machine installed along with a sewing machine for stitching. The heater wire 1 is supplied to immediately in front of a needle bar unit of the sewing machine for stitching, the movable table moves in a predetermined pattern in synchronization therewith and, at the same time, the heater wire 1 is stitched to the base material 11 by the sewing machine for stitching. In this manner, the heater wire 1 is arranged on the base material 11 in a serpentine shape. Fig. 3 is a sectional view showing, enlarged, a main part of a planar unit 21 in a state where the heater wire 1 has been stitched onto a surface of the base material 11. A sewing thread is made up of a needle thread 23 and a bobbin thread 25. The needle thread 23 envelops the heater wire 1 approximately around an entire circumference of the heater wire 1 and is entwined with the bobbin thread 25 and stitched onto the base material 11 on a rear side. The needle thread 23 is a 165-dtex polyester filament yarn and the bobbin thread 25 is a 165-dtex polyester filament yarn. A stitching pitch is set to 2 mm in a linear portion of the serpentine shape and to 1 mm in a curved portion of the serpentine shape.

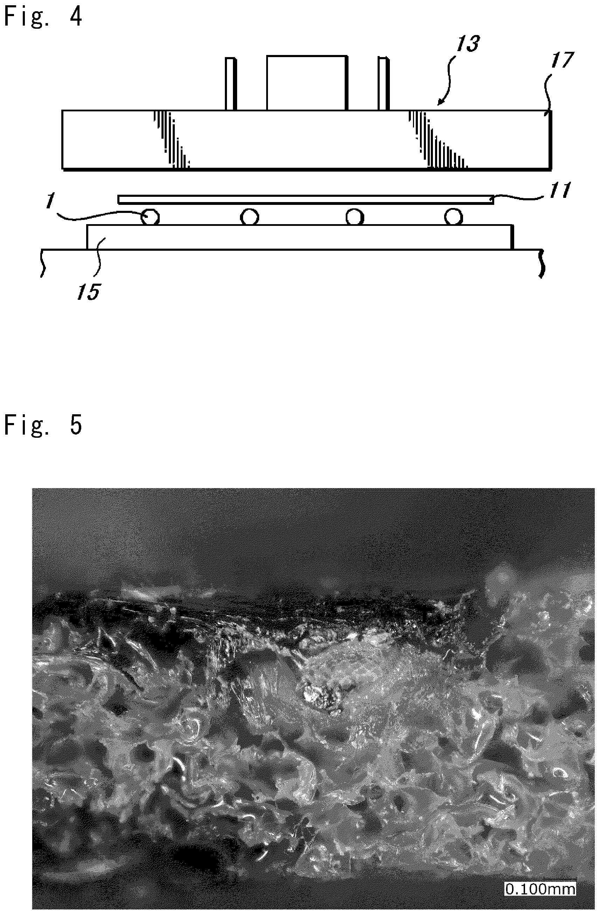

Next, a configuration in which the heater wire 1 described above is arranged on the base material 11 in a predetermined pattern shape to be bonded and fixed will be described. Fig. 4 is a diagram showing a configuration of a hot press-type heater manufacturing apparatus 13 for bonding and fixing the cord-shaped heater wire 1 onto the base material 11. First, the base material 11 onto which the heater wire 1 has been stitched is placed on a hot press jig 15. In this state, a press hot plate 17 descends and presses the base material 11 against the heater wire 1. At this point, for example, the press hot plate 17 applies heat and pressure of 230°C/5 seconds to the base material 11 and the heater wire 1. The thermal fusion bonding part 9 of the heater wire 1 and thermal fusion-bondable fibers of the base material 11 are both subjected to the heat and pressure and are fusion-bonded to each other. As a result, the heater wire 1 and the base material 11 are bonded and fixed to each other. In doing so, the hot press jig 15 may also be heated.

By performing the operations described above, the planar unit 21 similar to that shown in Figs. 1 and 2 can be obtained. Note that Fig. 2 is an enlarged sectional view of a main part of Fig. 2. Since the base material 11 is to be compressed by the press hot plate 17, locations where the heater wire 1 is arranged are to be subjected to higher pressure. Accordingly, the locations where the heater wire 1 is arranged in the base material 11 are given a higher density and become thinner than other locations while assuming a shape that follows a shape of the heater wire 1. Accordingly, a surface on which the heater wire 1 is arranged in the planar unit 21 assumes a flat shape without irregularities even in the locations where the heater wire 1 is arranged. In addition, since the base material 11 is compressed and has a high density in the planar unit 21 obtained in this manner, mechanical strength can be increased.

In addition, the needle thread 23 is inserted into the thermal fusion bonding part 9 of the heater wire 1 due to the heat and pressure applied by the press hot plate 17. Accordingly, protrusions due to the sewing thread (needle thread 23) disappear and the surface on which the heater wire 1 is arranged in the planar unit 21 assumes a flat shape. A sectional photograph of the planar unit 21 according to the first embodiment is shown as Fig. 5. As shown in Fig. 5, it can be confirmed that the needle thread 23 is inserted into the thermal fusion bonding part 9 of the heater wire 1.

Furthermore, since the base material 11 and the heater wire 1 are to be fixed by thermal fusion bonding after fastening and fixing the heater wire 1 to the base material 11 by sewing threads (the needle thread 23 and the bobbin thread 25), the flatness of the planar unit 21 can be further increased.

A thickness of the planar unit 21 obtained according to the first embodiment was 2.0 mm, a thickness of the base material 11 in a location where the heater wire 1 is arranged was 1.4 mm, and the thickness of the base material 11 in a location where the heater wire 1 is not arranged was 2.0 mm. In addition, the base material 11 in a location where the heater wire 1 is not arranged had an apparent density of 160 kg/m3 (in conformity to JIS K 7222) and a hardness of ASKER C 15 (in conformity to JIS K 7312).

The thermal fusion bonding part 9 in the outer circumference of the heater wire 1 had deformed and flowed due to the applied heat and pressure and a part thereof had penetrated into a void (pore) of the base material 11. In addition, locations where the heater wire 1 is arranged were free of irregularities and basically flat even when compared with peripheral thickness. In this case, a variation in thickness within a range of around ±10% can be described as being basically flat and represents a substantially approximately constant thickness. Furthermore, a variation in thickness in or near a range in which the user does not perceive irregularities both visually and tactilely can be described as being basically flat.

In the planar unit 21 obtained as described above, both ends of the heater wire 1 are extracted and connected to a lead wire 27 and the lead wire 27 connects the heater wire 1, a temperature control apparatus 29, and a connector (not illustrated). The temperature control apparatus is arranged on the heater wire 1 and performs temperature control of the planar unit due to heat generation by the heater wire 1. In addition, a connection with an electric system of a vehicle (not illustrated) is to be made via the connector described above.

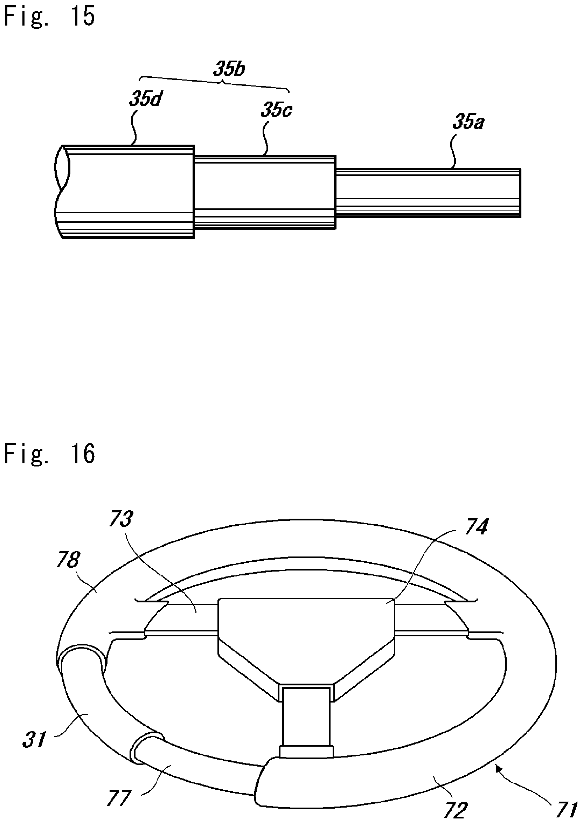

The planar unit 21 configured as described above is installed in a steering wheel 71 in a state such as that shown in Fig. 16. The steering wheel 71 is made up of a wheel part 72, a spoke part 73, and a boss part 74 and the planar unit 21 is to be installed between a wheel core material 77 and a covering material 78 of the wheel part 72.

An adhesion layer (not illustrated) for bonding the planar unit 21 and the covering material 78 of the steering wheel to each other or the planar unit 21 and the wheel core material 77 of the steering wheel to each other is formed in the base material 11. The adhesion layer is preferably formed by forming an adhesion layer solely constituted of an adhesive on a release sheet in advance and transferring the adhesion layer onto a surface of the base material 11 from the release sheet. Accordingly, the adhesive is prevented from penetrating into the base material 11 and the adhesion layer is only formed on the surface of the base material 11.

When installing the planar unit 21 in the steering wheel, any of first to fourth manufacturing processes described below was used.

### (First manufacturing process)

In the first manufacturing process, the planar unit 21 and the covering material 78 were bonded to each other and, in doing so, a surface on a side where the heater wire 1 was arranged and the covering material 78 were bonded to each other. Subsequently, the wheel core material 77 was covered by the covering material 78 to which the planar unit 21 had been bonded.

### (Second manufacturing process)

In the second manufacturing process, the planar unit 21 and the covering material 78 were bonded to each other and, in doing so, a surface on a side where the heater wire 1 was not arranged and the covering material 78 were bonded to each other. Subsequently, the wheel core material 77 was covered by the covering material 78 to which the planar unit 21 had been bonded.

### (Third manufacturing process)

In the third manufacturing process, the planar unit 21 and the wheel core material 77 were bonded to each other and, in doing so, a surface on a side where the heater wire 1 was arranged and the wheel core material 77 were bonded to each other. Subsequently, the wheel core material 77 to which the planar unit 21 had been bonded was covered by the covering material 78.

### (Fourth manufacturing process)

In the fourth manufacturing process, the planar unit 21 and the wheel core material 77 were bonded to each other and, in doing so, a surface on a side where the heater wire 1 was not arranged and the wheel core material 77 were bonded to each other. Subsequently, the wheel core material 77 to which the planar unit 21 had been bonded was covered by the covering material 78.

### (Second embodiment)

The planar unit 21 was obtained by using a polylactide fiber with an outer diameter of 0.165 mm as the needle thread 23 and a 110-dtex low-melting polyethylene yarn as the bobbin thread 25 as the sewing threads in the first embodiment described above but otherwise adopting similar conditions to the first embodiment.

In the second embodiment, the needle thread and the bobbin thread were melted by heat and pressure applied by the hot press-type heater manufacturing apparatus 13 and a sewing thread mark was formed in a vicinity of the heater wire of the planar unit. Since the sewing thread mark is also planarized by the applied heat and pressure, the surface on which the heater wire 1 is arranged in the planar unit 21 assumes a flat shape. A sectional photograph of the planar unit 21 according to the second embodiment is shown as Fig. 6. As shown in Fig. 6, it can be confirmed that the thermal fusion bonding part of the heater wire and the sewing thread mark is planarized.

### (Third embodiment)

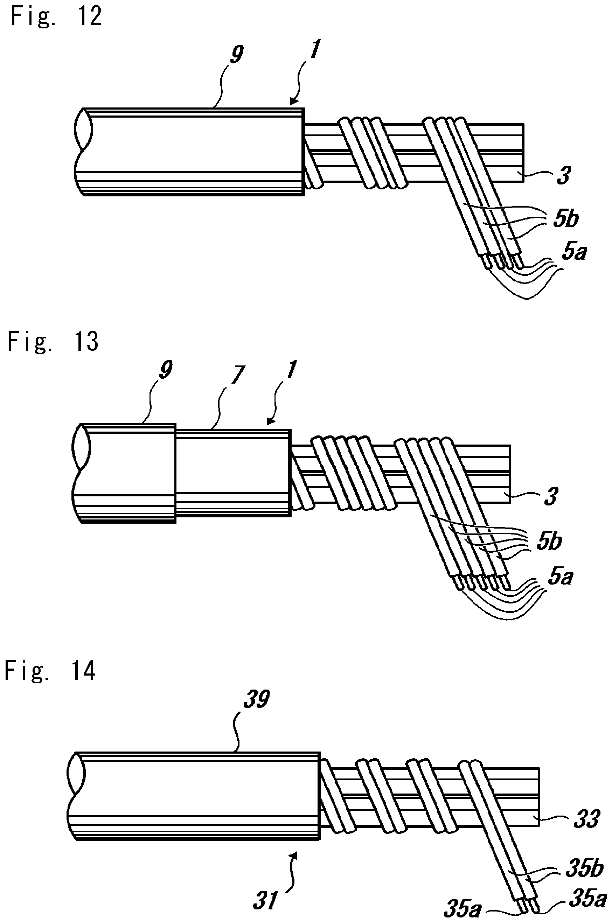

The planar unit 21 was obtained by using a sensor wire as the linear body in the first embodiment described above but otherwise adopting similar conditions to the first embodiment. A linear body 31 according to the third embodiment is configured as shown in Figs. 14 and 15. First, a core material 33 is formed of an aromatic polyamide fiber bundle with an outer diameter of approximately 0.2 mm. Two paralleled conductor strands 35a made of a copper alloy wire with a strand diameter of 0.08 mm and containing hard tin are spirally wound around an outer circumference of the core material 33 at a pitch of approximately 1.0 mm. As shown in Figs. 14 and 15, an insulating film 35b is formed around the conductor strands 35a. The insulating film 35b is formed of an inner layer 35c made of a polyurethane resin and an outer layer 35d made of a polyamide-imide resin. The inner layer 35c of the insulating film 35b was formed so as to become a layer with a thickness of 4 µm by applying a polyurethane varnish around the conductor strands 35a and drying the polyurethane varnish. Next, the outer layer 35d was formed so as to become a layer with a thickness of 4 µm by applying a polyamide-imide varnish on an outer circumference of the inner layer 35c and drying the polyamide-imide varnish. The outer circumference of the core material 33 around which the conductor strands 35a are wound is coated with an insulator layer. The insulator layer is formed by extrusion coating so that a polyethylene resin blended with a flame retardant assumes a thickness of 0.2 mm. In the present embodiment, the polyethylene resin of the insulator layer functions as a thermal fusion bonding part 39. A finished outer diameter of the linear body 31 configured as described above is 0.8 mm. The linear body 31 that functions as a sensor wire senses a capacitance value between two conductor strands 35a.

Each of the planar units 21 according to the first to third embodiment obtained as described above were installed in the steering wheel 71 as shown in Fig. 16 using the methods described in the first to fourth manufacturing processes. The steering wheel 71 was put to practical use in this state and checked for any sense of discomfort. The check was performed by having 10 users grip the steering wheel and perform 10 leftward and 10 rightward steering operations, asking the users whether they felt irregularities, and the number of respondents who experienced a sense of discomfort was studied.

With respect to the planar units according to the first to third embodiments, there were no users who said that they experienced a sense of discomfort regardless of the manufacturing process used to install the planar units in the steering wheel.

Note that the present invention is not limited to the embodiments described above. The heater wire 1 or a sensor wire may be used as the linear body 31. Using the heater wire 1 causes the unit including the linear body 31 to be a heater unit and using a sensor wire causes the unit including the linear body 31 to be a sensor unit. The linear body 31 that functions as a sensor wire can be used as sensors other than a capacitance sensor such as a temperature sensor. As a type of a temperature sensor, a solder wire may be used as the linear body to create an abnormal temperature sensing unit. In terms of sensing radio waves, conceivably, an antenna wire may be used as the linear body to create an antenna unit.

Various conventionally known cord-shaped heaters can be used as the heater wire 1 and, for example, the following configurations can be adopted.
1. As in the embodiment described above and shown in Fig. 7, the heater wire 1 formed by first stranding or paralleling a plurality of the conductor strands 5a having been coated by the insulating film 5b and winding the conductor strands 5a around the core material 3 and subsequently coating the outer circumference of the conductor strands 5a with the thermal fusion bonding part 9.
2. As shown in Fig. 9, the heater wire 1 formed by stranding a plurality of conductor strands 5a having been coated by the insulating film 5b.
3. As shown in Fig. 10, the heater wire 1 formed by paralleling a plurality of conductor strands 5a having been coated by the insulating film 5b.
4. As shown in Fig. 11, the heater wire 1 formed by alternately arranging conductor strands 5a having been coated by the insulating film 5b and conductor strands 5a not having been coated by the insulating film 5b.
5. As shown in Fig. 12, the heater wire 1 formed by paralleling and arranging conductor strands 5a having been coated by the insulating film 5b in a state where the number of the conductor strands 5a having been coated by the insulating film 5b have been increased as compared to the conductor strands 5a shown in Fig. 11.
6. As shown in Fig. 13, the heater wire 1 in which an insulating film 7 separate from the thermal fusion bonding part 9 is formed.

Heater wires 1 with various configurations other than the above are conceivable. In addition, the heater wire 1 can also be constructed by stranding the core material 3 and the conductor strands 5a. The above similarly applies when a sensor wire is used instead of the heater wire 1.

Examples of the core material 3 include fibers configured such that a core material thereof is a monofilament, a multifilament, a span, a fiber material thereof, or an organic polymeric material constituting a fiber material of an inorganic fiber such as glass fiber or an organic fiber such as polyethylene terephthalate and other polyester fibers, an aliphatic polyamide fiber, an aromatic polyamide fiber, or a wholly aromatic polyester fiber, and an circumference of the core material is coated with a thermoplastic organic polymeric material. In a case where the core material 3 with a heat-shrinkable property and thermal fusibility is used, when the conductor strand 5a becomes disconnected and anomalous heating occur, the core material 3 melts, becomes disconnected, and contracts. When the core material 3 contracts, since the conductor strands 5a wound around the core material 3 follows a movement of the core material 3, end portions of the disconnected conductor strands 5a separate from each other. Therefore, situations where respective end portions of the disconnected conductor strands 5a come into contact with or become separated from each other no longer repetitively occur. In addition, situations where respective end portions of the disconnected conductor strands 5a come into contact with each other over a small contact area such as point contact no longer occur. As a result, anomalous heat generation is prevented. In addition, when the conductor strands 5a are insulated by the insulating film 5b, the core material 3 need not necessarily be formed of an insulation material. For example, a stainless steel wire or a titanium alloy wire can be used as the core material 3. However, since there is a possibility that the conductor strands 5a may become disconnected, the core material 3 is favorably formed of an insulation material.

As the conductor strands 5a, conventionally-known conductor strands such as a copper wire, a copper alloy wire, a nickel wire, an iron wire, an aluminum wire, a nickel-chromium alloy wire, and an iron-chromium alloy wire can be used, and examples of a copper alloy wire include a tin-copper alloy wire, a copper-nickel alloy wire, and a silver-containing copper alloy wire that contains a copper solid solution and a copper-silver eutectic in a fibrous state. Among these wires, a copper wire or a copper alloy wire is preferably used from the perspective of a balance between cost and characteristics. While copper wires or copper alloy wires include those that are soft and those that are hard, hard wires are particularly preferable as compared to soft wires from the perspective of flex resistance. Note that a hard copper wire or a hard copper alloy wire refers to a wire in which individual metal grains are stretched by a cold working process such as a wire drawing process in a working direction and become a fibrous structure. When such a hard copper wire or a hard copper alloy wire is heated at or above a recrystallization temperature, working strain having occurred inside the metal grains is eliminated and crystalline nuclei to act as nuclei of new metal grains start to appear. Recrystallization in which the crystalline nuclei grow and sequentially replace old crystalline nuclei takes place and a state is created where the grains further grow. A soft copper wire or a soft copper alloy wire is a wire in a state where such grains have grown. While a soft copper wire or a soft copper alloy wire have higher elongation and electrical resistance values but a lower tensile strength than a hard copper wire or a hard copper alloy wire, the flex resistance of the soft copper wire or the soft copper alloy is lower than that of the hard copper wire or the hard copper alloy wire. In this manner, since a hard copper wire or a hard copper alloy wire becomes a soft copper wire or a soft copper alloy wire with low flex resistance due to heat treatment, working with as little thermal history as possible is preferably performed. Note that a hard copper wire is also defined in JIS-C 3101 (1994) and a soft copper wire in JIS-C 3102 (1984), and copper wires with an elongation of 15% or more when an outer diameter ranges from 0.10 to 0.26 mm, an elongation of 20% or more when the outer diameter ranges from 0.29 to 0.70 mm, an elongation of 25% or more when an outer diameter ranges from 0.80 to 1.8 mm, and an elongation of 30% or more when the outer diameter ranges from 2.0 to 7.0 mm are considered soft copper wires. In addition, copper wires include those plated with tin. A tin-plated hard copper wire is defined in JIS-C 3151 (1994) and a tin-plated soft copper wire is defined in JIS-C 3152 (1984). Furthermore, conductor strands 5a with various sectional shapes can be used and, in addition to those with a circular cross section which are normally used, so-called rectangular wires may also be used.

When a sensor wire for temperature detection is to be used as a linear body, the conductor strand 35a is preferably made of a material which is subjected to a large change in a resistance value with a change in temperature. Examples include various metal wires such as a copper wire, a copper alloy wire, a nickel wire, an iron wire, an aluminum wire, a nickel-chromium alloy wire, a copper-nickel alloy wire, and an iron-chromium alloy wire, carbon-fiber wires, and conductive resin wires. Among these wires, wires with a positive temperature coefficient are preferable. A nickel wire and a platinum wire with particularly large coefficients can be preferably used. When the wire has a positive temperature coefficient, since the resistance value increases as the temperature rises, a control method in which an abnormal temperature is determined when the resistance value increases and energization is stopped is to be adopted. Therefore, in the event that a disconnection of the conductor strands 35a occurs, since the resistance value reaches an infinite value, energization is to be stopped in a similar manner to when an abnormal temperature occurs. This is an extremely reliable method when viewed as a safety apparatus.

When winding the conductor strands 5a around the core material 3, a material with a small amount of springback when winding the conductor strands 5a is favorable among the materials of the conductor strands 5a described above. For example, with a silver-containing copper alloy wire that contains a copper solid solution and a copper-silver eutectic in a fibrous state or the like, while high tensile strength characteristics and superior tensile strength and bending strength are achieved, there is a high likelihood of springback during winding. Therefore, such a material is not preferable since floating of the conductor strands 5a or a fracture of the conductor strands 5a due to excessive winding tension is likely to occur when the conductor strands 5a are being wound around the core material 3 and habitual twisting is likely to occur after working. In particular, when adopting a mode in which the conductor strands 5a are coated with the insulating film 5b, a restoring force due to the insulating film 5b is to be additionally applied. Therefore, it is important to select a material with a low restoration rate as the conductor strands 5a to compensate for the restoring force due to the insulating film 5b.

The insulating film 5b to cover the conductor strands 5a may be formed by the two layers that are the inner layer 5c and the outer layer 5d as in the embodiments described above, formed by three or more layers, or formed as a single layer. When adopting a plurality of layers, a pyrolysis temperature of a material that constitutes the inner layer is preferably lower than whichever is lower between a melting point and a pyrolysis temperature of a material that constitutes the outer layer. In this case, the inner layer is a layer that is formed on the conductor strands 5a. In addition, since the outer layer need only be on an outer side of the inner layer, another outer layer can be further formed on an outer side of the outer layer or another intermediate layer can be formed between the inner layer and the outer layer.

Examples of the material of the insulating film 5b include various materials such as polyurethane resin, polyamide resin, polyimide resin, polyamide-imide resin, polyester-imide resin, nylon resin, polyester-nylon resin, polyethylene resin, polystyrene resin, polypropylene resin, polyester resin, polybenzimidazole resin, vinyl chloride resin, fluorine resin, and silicone resin. A plurality of these materials may be used in combination or the materials may be blended with various known additives such as a flame retardant or an antioxidant. When combining materials from these resins, a pyrolysis temperature of a material that constitutes the inner layer is set to be lower than whichever is lower between a melting point and a pyrolysis temperature of a material that constitutes the outer layer. As the material of the inner layer, polyurethane resin, vinyl chloride resin, polyacetal resin, polystyrene resin, polypropylene resin, polymethylmethacrylate, polyester resins such as polyethylene terephthalate, and polyvinyl alcohol can be selected. In particular, preferably, the material of the inner layer is a thermoset resin and the material constituting the outer layer is a thermoset resin. In this case, thermoset resins include cross-linkable material. From the perspectives of heat generation characteristics as a cord-shaped heater and easy workability of terminals such as soldering, preferably, the material of the inner layer is polyurethane resin or polyester resin and the material of the outer layer is any of polyimide resin, polyamide-imide resin, and silicone resin. In particular, preferably, the material of the inner layer is polyurethane resin and the material of the outer layer is polyamide-imide resin. The polyurethane resin may be modified or blended in various ways as in the case of imide-containing polyurethane or the like.

In addition, the thickness of the insulating film 5b is preferably 3 to 30% of a diameter of the conductor strands 5a. When less than 3%, there is a possibility that sufficient voltage resistance characteristics cannot be obtained and it becomes meaningless to individually coat the conductor strands 5a. When more than 30%, removing the insulating film 5b when crimping connecting terminals becomes difficult and heater wires end up becoming unnecessarily thick.

When paralleling or twisting the conductor strands 5a described above and winding the conductor strands 5a around the core material 3, paralleling is more preferable than twisting. This is because paralleling results in a smaller diameter of the heater wire and also realizes a smooth surface. Other than paralleling or twisting, the conductor strands 5a can conceivably be braided on the core material 3.

As the heater wire 1 according to the present invention, a heater wire in which the insulating film 7 is formed on the outer circumference of the conductor strands 5a is also conceivable (for example, refer to Fig. 13). Due to the insulating film 7, in the event that a disconnection of the conductor strands 5a occurs, energization to other members is insulated and, even when sparks occur, heat generation at high temperatures is thermally insulated. When forming the insulating film 7, the insulating film 7 may be formed by extrusion molding or the like or the insulating film 7 having been molded in a tube shape in advance may be overlaid and a method of formation is not particularly limited. When forming the insulating film 7 by extrusion molding, since a position of the conductor strands 5a becomes fixed and friction and bending of the conductor strands 5a due to displacement can be prevented, flex resistance increases and is therefore preferable. A material constituting the insulating film 7 may also be appropriately designed according to a usage mode or a usage environment of the heater wire and examples of the material constituting the insulating film 7 include a wide variety of materials such as a polyolefin-based resin, a polyester-based resin, a polyurethane-based resin, an aromatic polyamide-based resin, an aliphatic polyamide-based resin, vinyl chloride resin, a modified Noryl resin (polyphenylene oxide resin), nylon resin, polystyrene resin, fluorine resin, synthetic rubber, fluoro-rubber, an ethylene-based thermoplastic elastomer, an urethane-based thermoplastic elastomer, a styrene-based thermoplastic elastomer, and a polyester-based thermoplastic elastomer. In particular, a flame-retardant polymer composition is preferably used. A flame-retardant polymer composition described herein refers to polymer compositions with an oxygen index of 21 or higher according to the Determination of Burning Behavior as set forth in JIS-K7201 (1999). Polymer compositions with an oxygen index of 26 or higher are particularly preferable. In order to obtain such flame retardancy, the material constituting the insulating film 7 described above may be appropriately blended with a flame retardant or the like. Examples of the flame retardant include a metal hydrate such as magnesium hydroxide or aluminum hydroxide, antimony oxide, melamine compounds, phosphorus-based compounds, chlorine-based flame retardants, and bromine-based flame retardants. Surface treatment may be appropriately applied to these flame retardants using known methods.

The heater wire 1 can be thermal fusion-bonded to the base material 11 by applying heat and pressure by forming the thermal fusion bonding part 9 on the outer circumference of the heater wire 1. When forming the insulating film 7, the thermal fusion bonding part 9 is formed on the outer circumference of the insulating film 7. As a material that constitutes the thermal fusion bonding part 9, a material similar to the material constituting the insulating film 7 described above can be used. Among such materials, an olefin-based resin that provides superior adhesion with the base material is preferable. Examples of olefin-based resins include high-density polyethylene, low-density polyethylene, ultra-low-density polyethylene, linear low-density polyethylene, polypropylene, polybutene, an ethylene-α-olefin copolymer, and an ethylene-unsaturated ester copolymer. Among these examples, an ethylene-unsaturated ester copolymer is particularly preferable. Since an ethylene-unsaturated ester copolymer is a molecular structure having oxygen in a molecule, combustion heat decreases as compared to a resin with a molecular structure solely constituted of carbon and hydrogen such as polyethylene and, consequently, this leads to suppressing combustion. In addition, since intrinsic adhesion is high, adhesion with the base material is favorable, and since a decline in adhesion when blending an inorganic powder or the like is minimal, various flame retardants can be suitably blended. Examples of an ethylene-unsaturated ester copolymer include an ethylene-vinyl acetate copolymer, an ethylene-methyl (meth) acrylate copolymer, an ethylene-ethyl (meth) acrylate copolymer, and an ethylene-butyl (meth) acrylate copolymer which can be used independently or a mixture of two or more of these copolymers may be used. In this case, "(meth) acrylate" represents both acrylic acid and methacrylic acid. While a material may be optionally selected from these materials, the selected material preferably melts at a temperature equal to or lower than a kickoff temperature or a temperature equal to or lower than a melting point of the material that constitutes the insulating film 5b described above. In addition, an example of a material with superior adhesion with the base material 11 is a polyester-based thermoplastic elastomer. While polyester-based thermoplastic elastomers include a polyester-polyester type and a polyester-polyether type, the polyester-polyether type has higher adhesion and is therefore preferable. Note that when thermal fusion-bonding the heater wire 1 and the base material 11 to each other, adhesion strength between the heater wire 1 and the base material 11 is particularly important. When the adhesion strength is insufficient, since the heater wire 1 detaches from the base material 11 through repetitive use and, as a result, unintended bending is applied to the heater wire 1, there is a possibility of disconnection of the conductor strands 5a. When a disconnection of the conductor strands 5a occurs, not only does the conductor strands 5a no longer play a role as a heater but there is also a risk of sparks occurring due to chattering.

When forming the insulating film 7, a melting point of the insulating film 7 needs to be higher than a melting point of the thermal fusion bonding part 9. Accordingly, deformation of the shape of the insulating film 7 is almost completely avoided and sufficient insulation properties can be maintained even when fusion-bonding the thermal fusion bonding part 9 by applying heat and pressure or the like. The melting point of the insulating film 7 preferably ranges from 215°C to 250°C and the melting point of the thermal fusion bonding part 9 preferably ranges from 100°C to 185°C. In addition, when forming the insulating film 5b on the conductor strands 5a, the melting point of the insulating film 7 is preferably lower than a melting point of the insulating film 5b.

Furthermore, the material constituting the insulating film 7 and the material constituting the thermal fusion bonding part 9 are preferably polymeric materials of a same type. In this case, polymeric materials of a same type are polymeric materials that respectively share a common main chain structure, polymeric materials that respectively share a common functional group, polymeric materials that only differ from each other in molecular weight, copolymers that respectively share a common monomer unit, mixtures that are blended with a common polymeric material, and the like. With such materials, since the insulating film 7 and the thermal fusion bonding part 9 are sufficiently bonded to each other, the heater wire can be prevented from detaching from the base material.

Layers other than the two layers of the insulating film 7 and the thermal fusion bonding part 9 may be appropriately formed on the outer circumference of the conductor strands 5a. In addition, the insulating film 7 and the thermal fusion bonding part 9 are not limited to being continuously formed in a length direction and aspects such as forming in a linear shape or a spiral linear shape in a length direction of the heater wire 1, forming in a dotted pattern, and forming intermittently are conceivable. However, from the perspective of adhesion strength, the insulating film 7 and the thermal fusion bonding part 9 are preferably continuously formed in a length direction.

In addition, with the heater wire 1 obtained as described above, in a flexibility test of performing bending of 90 degrees at a radius of curvature that is six times its own diameter, the number of bending attempts until at least one conductor strand breaks is preferably 20,000 or more.

The base material 11 is also not limited to a foamed polyurethane resin and, for example, various polymeric foams such as a foamed resin sheet made of other material and a foamed rubber sheet are conceivable. In particular, a polymeric foam that includes voids and has superior stretchability is preferable, preferably with hardness thereof being adjusted so that irregularities of the heater wire do not appear on a surface. In addition, methods of adjusting hardness include adjusting a foaming rate, changing a state of bubbles to closed cells or open cells, and using a material with a hardness according to a purpose. The material may be selected from various resins, rubbers, thermoplastic elastomers, and the like such as polyurethane resin, chloroprene rubber, silicone resin, silicone rubber, neoprene rubber, diene rubber, nitrile rubber, natural rubber, polyethylene resin, polypropylene resin, vinyl chloride resin, and ethylene-vinyl acetate copolymer. As the base material 11, in addition to the above, various materials such as nonwoven fabric, woven fabric, paper, aluminum foil, a mica plate, a resin sheet, and a stretched porous material can be used. The base material 11 is preferably flame-retardant and an appropriate mixture of a flame-retardant fiber and a flame retarder is preferably used. In addition, a plurality of base materials 11 can be used by being laminated or the like and, in such a case, a different material or a same material with a different degree of porosity or the like may be used as each base material 11.

As the sewing thread, various known thread materials can be used. Examples include fibers configured such that a core material thereof is a monofilament, a multifilament, a span, a fiber material thereof, or an organic polymeric material constituting a fiber material of an inorganic fiber such as glass fiber or an organic fiber such as polyethylene terephthalate and other polyester fibers, an aliphatic polyamide fiber, an aromatic polyamide fiber, a wholly aromatic polyester fiber and the like, polyethylene fiber, polypropylene fiber, polyvinyl chloride fiber, polylactide fiber, and fluorine resin fiber and an circumference of the core material is coated with a thermoplastic organic polymeric material. When fusion-bonding the linear body by applying heat and pressure, the sewing thread may also melt and form a sewing thread mark or the sewing thread may remain without being melted. When the sewing thread melts, fusion-bonding of the linear body and the base material due to the sewing thread mark can be expected and, when the sewing thread remains, fixing of the linear body and the base material by the sewing thread can be expected. In addition, a sewing method is also not particularly limited. When sewing with a sewing machine for stitching, different materials may be used as the needle thread 23 and the bobbin thread 25 or a same material may be used. For example, conceivably, only the needle thread 23 may be made to melt during fusion-bonding of the linear body by applying heat and pressure. In this case, while the bobbin thread 25 is to remain, since the needle thread 23 has been melted, the bobbin thread 25 can also be removed. Since the step of fusion-bonding by applying heat and pressure is to be performed after the step of sewing and sewing need only provide fixing at a strength comparable to that of temporary fixing, a stitching pitch by the sewing thread is not particularly limited. While fixing strength increases as the stitching pitch is made smaller, since a smaller stitching pitch also lowers production speed, sewing need only be performed at a minimum stitching pitch that allows the pattern shape of the linear body to be maintained. In addition, the stitching pitch may be changed from one location to the next. When the linear body is to be arranged in a pattern shape such as a serpentine shape, only curved portions of the serpentine may conceivably adopt a small stitching pitch to ensure that the serpentine shape remains intact.

In addition, when arranging the heater wire 1 on the base material 11, instead of an aspect in which the heater wire 1 is bonded and fixed to the base material 11 due to fusion-bonding by applying heat and pressure, the heater wire 1 may be fixed to the base material 11 by other aspects. For example, conceivable aspects include an aspect of energizing and heating the heater wire 1 so as to reach a temperature higher than during normal use and melting the thermal fusion bonding part 9 with the heat to bond and fix the thermal fusion bonding part 9 to the base material 11, an aspect of heating the conductor strands 5a by induction heating and melting the thermal fusion bonding part 9 with the heat to bond and fix the thermal fusion bonding part 9 to the base material 11, an aspect of melting the thermal fusion bonding part 9 made of a thermal fusion bonding material with hot air to bond and fix the thermal fusion bonding part 9, and an aspect of sandwiching and fixing with a pair of base materials 11 while applying heat. Furthermore, when applying heat and pressure to the base material 11, not only the press hot plate 17 but the hot press jig 15 may also be heated. In doing so, a compression rate or, in other words, a degree of porosity of the base material 11 may be changed assuming that temperatures of the press hot plate 17 and the hot press jig 15 differ from each other.

In addition, as the adhesion layer, for example, various adhesion layers such as an adhesion layer that is made of a polymeric acrylic pressure sensitive adhesive and that does not use a tape base material or an adhesion layer made by forming an adhesive on both sides of a polypropylene film can be used. An adhesion layer with sufficient flame retardancy to pass FMVSS No. 302, Flammability of Interior Materials by itself improves flame retardancy of the planar unit and is therefore preferable. Furthermore, an adhesion layer solely made of a pressure sensitive adhesive is preferable so as not to impair stretchability of the planar unit.

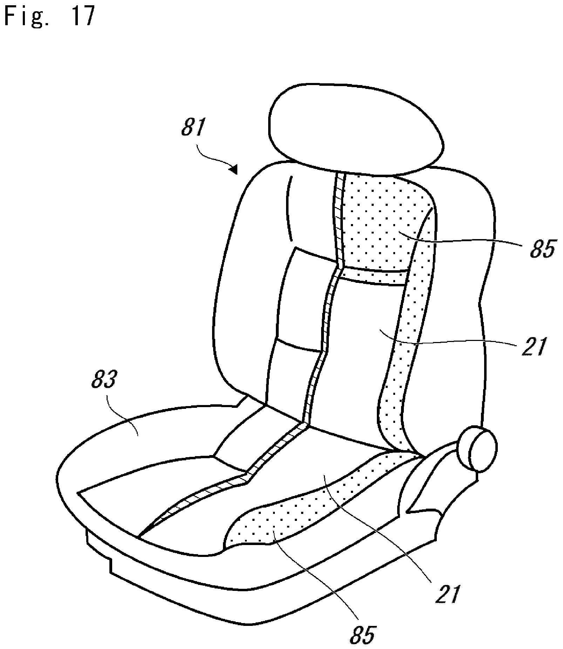

As applications of the planar unit 21 according to the present invention, the planar unit 21 can be used in various applications besides a steering wheel such as that shown in Fig. 16 described above. For example, the planar unit 21 configured as described above is conceivably embedded and arranged in a vehicular seat 81 in a state such as that shown in Fig. 17. The planar unit 21 in Fig. 17 is affixed to a skin cover 83 or a seat pad 85 and arranged between the skin cover 83 and the seat pad 85. In this case, the planar unit 21 is a heater unit in which the linear body is a heater wire and is to be used as a heater apparatus of the seat. In addition, conceivably, a sensor unit in which the linear body is a capacitance sensor wire may be used to detect a state of seat occupancy.

### Industrial Applicability

As described in detail above, the present invention can prevent a user from feeling a sense of discomfort during a steering operation. Such a planar unit can be suitably used in a steering wheel or a seat that is used in, for example, automobiles, vessels, various transport vehicles, various farm vehicles, and various civil engineering and construction vehicles as a heater unit for heating a steering wheel part or the seat, as a temperature sensor unit for detecting a temperature of the steering wheel or the seat, or as a capacitance sensor unit for detecting a grasped state of the steering wheel or an occupancy state of the seat. In addition, taking advantage of the fact that the planar unit according to the present invention has no irregularities in a linear body part and is flat, the planar unit can be utilized in applications other than a steering wheel and a seat. For example, the planar unit can conceivably be applied to an electric blanket, an electrically-heated carpet, a heated toilet seat, a heater for an antifog mirror, a cooking instrument, a heater for floor panel heating, a heater for clothing, various planar temperature detectors, capacitance sensors, and the like.

The present application claims priority on the basis of Japanese Patent Application No. 2022-70005 filed on April 21, 2022, the entire contents of which are incorporated herein by reference.

### Reference Signs List

- 1: HEATER WIRE (LINEAR BODY)
- 3: CORE MATERIAL
- 5a: CONDUCTOR STRAND
- 5b: INSULATING FILM
- 9: THERMAL FUSION BONDING PART
- 11: BASE MATERIAL
- 21: PLANAR UNIT
- 23: NEEDLE THREAD (SEWING THREAD)
- 25: BOBBIN THREAD (SEWING THREAD)
- 31: LINEAR BODY
- 33: CORE MATERIAL
- 35a: CONDUCTOR STRAND
- 35b: INSULATING FILM
- 39: THERMAL FUSION BONDING PART
- 71: STEERING WHEEL
- 77: WHEEL CORE MATERIAL
- 78: COVERING MATERIAL
- 81: VEHICULAR SEAT
- 83: SKIN COVER
- 85: SEAT PAD

## Claims

1. A planar unit comprising a base material and a linear body to be arranged on the base material, the linear body being one of or both a heater wire and a sensor wire, wherein
a thermal fusion bonding part is formed on an outermost layer of the linear body,
the planar unit includes a sewing thread that couples the linear body and the base material to each other, and
the sewing thread is inserted into the thermal fusion bonding part of the linear body.

2. The planar unit according to claim 1, wherein a thickness of a location where the linear body is arranged in the base material is made thin so as to follow a shape of the linear body, and the sewing thread is inserted into the thermal fusion bonding part of the linear body and has a basically flat shape.

3. A planar unit comprising a base material and a linear body to be arranged on the base material, the linear body being one of or both a heater wire and a sensor wire, wherein
a thermal fusion bonding part is formed on an outermost layer of the linear body,
the planar unit includes a sewing thread mark created by melting of a sewing thread that couples the linear body and the base material to each other, and
the thermal fusion bonding part of the linear body and the sewing thread mark is planarized.

4. The planar unit according to claim 3, wherein a thickness of a location where the linear body is arranged in the base material is made thin so as to follow a shape of the linear body, and the thermal fusion bonding part of the linear body and the sewing thread mark is planarized and have a basically flat shape.

5. A steering wheel comprising the planar unit according to any one of claims 1 to 4, a wheel core material, and a covering material, wherein the planar unit is installed between the wheel core material and the covering material.

6. A method of manufacturing a planar unit, comprising the steps of: fixing a linear body onto a base material by a sewing thread, the linear body having a thermal fusion bonding part formed on an outermost layer thereof; and
subjecting the base material and the linear body to heat and pressure to make a thickness of a location where the linear body is arranged in the base material thin so as to follow a shape of the linear body, causing the sewing thread to be inserted into the thermal fusion bonding part of the linear body to give the sewing thread a basically flat shape, and fixing the base material and the linear body to each other with the thermal fusion bonding part, wherein
the linear body is one of or both a heater wire and a sensor wire.

7. A method of manufacturing a planar unit, comprising the steps of: fixing a linear body onto a base material by a sewing thread, the linear body having a thermal fusion bonding part formed on an outermost layer thereof; and
subjecting the base material and the linear body to heat and pressure to make a thickness of a location where the linear body is arranged in the base material thin so as to follow a shape of the linear body, melting the sewing thread and the thermal fusion bonding part, planarizing a sewing thread mark created by melting of the sewing thread and the thermal fusion bonding part to give the sewing thread mark and the thermal fusion bonding part a basically flat shape, and fixing the base material and the linear body to each other with the thermal fusion bonding part, wherein
the linear body is one of or both a heater wire and a sensor wire.
